# EUROPEAN PATENT SPECIFICATION

(11) **EP 3 016 316 B1**
(45) Date of publication and mention of the grant of the patent: **13.09.2017**
(21) Application number: 13890606.0
(22) Date of filing: 30.07.2013
(51) Int. Cl.: H04L 12/24

(54) **NETWORK CONTROL METHOD AND APPARATUS**
NETZWERKSTEUERUNGSVERFAHREN UND -VORRICHTUNG
PROCÉDÉ ET APPAREIL DE COMMANDE DE RÉSEAU

(43) Date of publication of application: 04.05.2016
(73) Proprietor: Huawei Technologies Co., Ltd., Longgang District Shenzhen, Guangdong 518129 (CN)
(72) Inventor: LI, Gang, Shenzhen Guangdong 518129 (CN)
(74) Representative: Pfenning, Meinig & Partner mbB
(86) International application number: PCT/CN2013/080444
(87) International publication number: WO 2015/013896

(56) References cited:
- WO-A1-2013/055697
- WO-A1-2013/063329
- CN-A- 101 888 683
- CN-A- 102 394 774
- CN-A- 103 596 652
- JP-A- 2004 355 446

## Description

### TECHNICAL FIELD

The present invention relates to the field of communications technologies, and in particular, to a network control method and apparatus.

### BACKGROUND

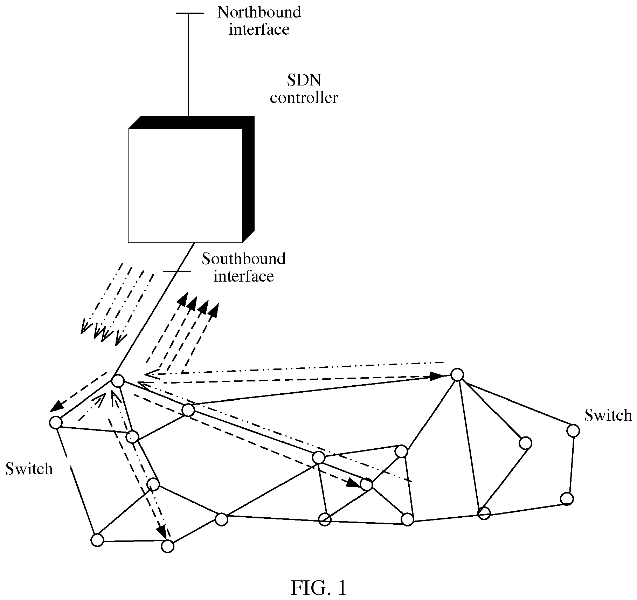

At present, to solve current problems such as that network operation and maintenance management are difficult, a productization period is long, and device costs are high, the industry has put forward a software defined network (Software Defined Network, SDN). As shown in FIG. 1, the SDN mainly includes system components such as: a northbound interface connected to an upper-layer application, an SDN controller, a switch supporting the SDN controller, and a southbound interface located between the SDN controller and the switch.

The SDN controller is a core system component of the SDN, and needs to support excessively many real-time functions; therefore, the SDN controller has the following performance risks:
(1) Information passing through a control channel of the SDN controller is dense and easily congested.
(2) When a network controlled by the SDN controller is relatively large, the SDN controller needs to process relatively many events, and once performance of the SDN controller does not meet a requirement, a service cannot be processed in time, and network congestion may be caused.
(3) After the SDN controller becomes faulty, the network may break down.

At present, a method for solving the performance risks of the SDN controller is to classify controllers into a primary controller and a secondary controller. In a normal case, the primary controller controls a network, and backs up data to the secondary controller at the same time. A device in the network includes communication addresses of both the primary controller and the secondary controller. After the primary controller becomes faulty, the secondary controller is started, to prevent network breakdown.

The foregoing method cannot solve the problem that network congestion occurs because performance of an SDN controller does not meet a requirement when a network controlled by the SDN controller is relatively large. WO 2013/055697 A1 discloses a method comprising receiving a network protocol packet at a router adapted for routing data packets to one or more additional routers. A standby controller 110 mimics some of the operations of a master controller 108, such that when the master controller 108 fails, the standby controller 110 can assume the role of the master controller.

### SUMMARY

Embodiments of the present invention provide a network control method and apparatus, as defined in the present independent claims, so as to solve a problem in the prior art that network congestion occurs because performance of an SDN controller does not meet a requirement when a network controlled by the SDN controller is relatively large. The invention is defined by the attached independent claims 1 and 8. Further embodiments are provided in the dependent claims.

According to first aspect, an embodiment of the present invention provides a network control method, including:
acquiring network resource information and running status information of each controller in a controller cluster, where the controller cluster includes a subdomain controller and a parent controller, where the subdomain controller discovers and controls a subdomain network, and the parent controller controls a global network based on the subdomain controller; and
determining a faulty controller, determining a secondary controller according to the network resource information and the running status information of each controller in the controller cluster, and forwarding network resource information of the faulty controller to the secondary controller, so that the secondary controller controls a network controlled by the faulty controller.

With reference to the first aspect, in a first possible implementation manner, the acquiring network resource information of each controller in a controller cluster specifically includes:
synchronously acquiring a communication address, service information, and routing information that are of a node controlled by each controller in the controller cluster.

With reference to the first aspect, or the first possible implementation manner of the first aspect, in a second possible implementation manner, the determining a secondary controller according to the network resource information and the running status information of each controller in the controller cluster, and forwarding network resource information of the faulty controller to the secondary controller, so that the secondary controller controls a corresponding network specifically includes:
when it is determined, according to the network resource information and the running status information of each controller in the controller cluster, that secondary controllers are N secondary controllers, dividing the network resource information of the faulty controller into N pieces of partial network resource information, and separately sending the N pieces of partial network resource information to the N secondary subdomain controllers, so that each secondary subdomain controller reconstructs and controls, according to acquired partial network resource information, the network controlled by the faulty controller, where N is a positive integer greater than 1.

With reference to the first aspect, or the first possible implementation manner of the first aspect, or the second possible implementation manner of the first aspect, in a third possible implementation manner of the first aspect, the determining a faulty controller specifically includes:
when controller application information is received, acquiring a communication address of a node sending the controller application information, and determining the faulty controller according to the communication address of the node and the synchronously acquired network resource information of each controller in the controller cluster; or
when it is determined that a session between a proxy server and a controller is interrupted, determining that the controller is a faulty controller.

With reference to the first aspect, or the first possible implementation manner of the first aspect, or the second possible implementation manner of the first aspect, or the third possible implementation manner of the first aspect, in a fourth possible implementation manner of the first aspect, the faulty controller is a subdomain controller, and the determining a secondary controller according to the network resource information and the running status information of each controller in the controller cluster specifically includes:
determining, according to the network resource information and the running status information of each controller in the controller cluster, that a secondary subdomain controller is used as a secondary controller, where the secondary subdomain controller is a newly enabled subdomain controller, or a subdomain controller that is in an available state in the controller cluster.

With reference to the fourth possible implementation manner of the first aspect, in a fifth possible implementation manner of the first aspect, the forwarding network resource information of the faulty controller to the secondary controller, so that the secondary controller controls a network controlled by the faulty controller specifically includes:
forwarding the network resource information of the faulty controller to the secondary subdomain controller, allocating a communication address to the secondary subdomain controller according to the network resource information, and notifying the communication address to a device in a subdomain network controlled by the faulty controller, so that the secondary subdomain controller controls the subdomain network controlled by the faulty controller.

With reference to the first aspect, or the first possible implementation manner of the first aspect, or the second possible implementation manner of the first aspect, or the third possible implementation manner of the first aspect, in a sixth possible implementation manner of the first aspect, the faulty controller is a parent controller, and the determining a secondary controller according to the network resource information and the running status information of each controller in the controller cluster specifically includes:
determining, according to the network resource information and the running status information of each controller in the controller cluster, that a secondary parent controller is used as the secondary controller, where the secondary parent controller is a newly enabled parent controller, or a parent controller that is in an available state in the controller cluster.

With reference to the sixth possible implementation manner of the first aspect, in a seventh possible implementation manner of first aspect, the forwarding network resource information of the faulty controller to the secondary controller, so that the secondary controller controls a network controlled by the faulty controller specifically includes:
forwarding network resource information of any controller to the secondary parent controller, allocating a communication address to the secondary parent controller according to the network resource information, and notifying the communication address to a subdomain controller controlled by the faulty controller, so that the secondary parent controller controls a global network controlled by the faulty controller.

According to a second aspect, an embodiment of the present invention provides a network control method, including:
synchronously acquiring network resource information of each controller in a controller cluster, where the controller cluster includes a subdomain controller and a parent controller, where the subdomain controller discovers and controls a subdomain network, and the parent controller controls a global network based on the subdomain controller;
synchronizing the network resource information of each controller to a corresponding secondary controller; and
determining a faulty controller, and instructing the corresponding secondary controller to control a network controlled by the faulty controller.

With reference to the second aspect, in a first possible implementation manner of the second aspect, the network resource information includes at least service information and/or routing information.

With reference to the second aspect, or the first possible implementation manner of the second aspect, in a second possible implementation manner of the second aspect, the determining a faulty controller specifically includes:
when controller application information is received, acquiring a communication address of a node sending the controller application information, and determining the faulty controller according to the communication address of the node and the synchronously acquired network resource information of each controller in the controller cluster; or
when it is determined that a session between a proxy server and a controller is interrupted, determining that the controller is a faulty controller.

With reference to the second aspect, or the first possible implementation manner of the second aspect, or the second possible implementation manner of the second aspect, in a third possible implementation manner of second aspect, the synchronizing the network resource information of each controller to a corresponding secondary controller specifically includes:
synchronizing the network resource information of each controller to a virtual machine, and using the virtual machine as a secondary controller of the controller; or
synchronizing the network resource information of each controller to an entity apparatus corresponding to the controller, and using the entity apparatus as a secondary controller of the controller.

According to a third aspect, an embodiment of the present invention provides a network control apparatus, including:
an acquiring module, configured to acquire network resource information and running status information of each controller in a controller cluster, where the controller cluster includes a subdomain controller and a parent controller, where the subdomain controller discovers and controls a subdomain network, and the parent controller controls a global network based on the subdomain controller;
a determining module, configured to determine a faulty controller; and
a forwarding module, configured to determine a secondary controller according to the network resource information and the running status information of each controller in the controller cluster, and forward network resource information of the faulty controller to the secondary controller, so that the secondary controller controls a network controlled by the faulty controller.

With reference to the third aspect, in a first possible implementation manner of the third aspect, the acquiring module is specifically configured to:
synchronously acquire a communication address, service information, routing information, and running status information that are of a node controlled by each controller in the controller cluster.

With reference to the third aspect or the first possible implementation manner of the third aspect, in a second possible implementation manner of the third aspect, the forwarding module is specifically configured to:
when it is determined, according to the network resource information and the running status information of each controller in the controller cluster, that secondary controllers are N secondary controllers, divide the network resource information of the faulty controller into N pieces of partial network resource information, and separately send the N pieces of partial network resource information to the N secondary subdomain controllers, so that each secondary subdomain controller reconstructs and controls, according to acquired partial network resource information, the network controlled by the faulty controller, where N is a positive integer greater than 1.

With reference to the third aspect, or the first possible implementation manner of the third aspect, or with reference to the second possible implementation manner of the third aspect, in a third possible implementation manner of the third aspect, the determining module is specifically configured to:
when controller application information is received, acquire a communication address of a node sending the controller application information, and determine the faulty controller according to the communication address of the node and the synchronously acquired network resource information of each controller in the controller cluster; or
when it is determined that a session between the apparatus and a controller is interrupted, determine that the controller is a faulty controller.

With reference to the third aspect, or the first possible implementation manner of the third aspect, or with reference to the second possible implementation manner of the third aspect, or the third possible implementation manner of the third aspect, in a fourth possible implementation manner of the third aspect, the forwarding module includes:
a first submodule, configured to: when the determining module determines that the faulty controller is a subdomain controller, determine, according to the network resource information and the running status information of each controller in the controller cluster, that a secondary subdomain controller is used as a secondary controller, where the secondary subdomain controller is a newly enabled subdomain controller, or a subdomain controller that is in an available state in the controller cluster; and
a second submodule, configured to forward the network resource information of the faulty controller to the secondary controller, so that the secondary controller controls the network controlled by the faulty controller.

With reference to the fourth possible implementation manner of the third aspect, in a fifth possible implementation manner of the third aspect, the second submodule is specifically configured to:
forward the network resource information of the faulty controller to the secondary subdomain controller, allocate a communication address to the secondary subdomain controller according to the network resource information, and notify the communication address to a device in a subdomain network controlled by the faulty controller, so that the secondary subdomain controller controls the subdomain network controlled by the faulty controller.

With reference to the third aspect, or the first possible implementation manner of the third aspect, or the second possible implementation manner of the third aspect, or the third possible implementation manner of the third aspect, in a sixth possible implementation manner of the third aspect, the forwarding module includes:
a first submodule, configured to: when the determining module determines that the faulty controller is a parent controller, determine, according to the network resource information and the running status information of each controller in the controller cluster, that a secondary parent controller is used as the secondary controller, where the secondary parent controller is a newly enabled parent controller, or a parent controller that is in an available state in the controller cluster; and
a second submodule, configured to forward the network resource information of the faulty controller to the secondary controller, so that the secondary controller controls the network controlled by the faulty controller.

With reference to the sixth possible implementation manner of the third aspect, in a seventh possible implementation manner of the third aspect, the second submodule is specifically configured to:
forward network resource information of any controller to the secondary parent controller, allocate a communication address to the secondary parent controller according to the network resource information, and notify the communication address to a subdomain controller controlled by the faulty controller, so that the secondary parent controller controls a global network controlled by the faulty controller.

According to a fourth aspect, an embodiment of the present invention further provides a network control apparatus, including:
an acquiring module, configured to synchronously acquire network resource information of each controller in a controller cluster, where the controller cluster includes a subdomain controller and a parent controller, where the subdomain controller discovers and controls a subdomain network, and the parent controller controls a global network based on the subdomain controller;
a synchronization module, configured to synchronize the network resource information of each controller to a corresponding secondary controller; and
a determining module, configured to determine a faulty controller, and instruct the corresponding secondary controller to control a network controlled by the faulty controller.

With reference to the fourth aspect, in a first possible implementation manner of the fourth aspect, the network resource information includes at least service information and/or routing information.

With reference to the fourth aspect, or the first possible implementation manner of the fourth aspect, in a second possible implementation manner of the fourth aspect, the determining module is specifically configured to:
when controller application information is received, acquire a communication address of a node sending the controller application information, determine the faulty controller according to the communication address of the node and the synchronously acquired network resource information of each controller in the controller cluster, and instruct a corresponding secondary controller to control a network controlled by the faulty controller; or
when it is determined that a session between the apparatus and the controller is interrupted, determine that the controller is a faulty controller, and instruct a corresponding secondary controller to control a network controlled by the faulty controller.

With reference to the fourth aspect, or the first possible implementation manner of the fourth aspect, or the second possible implementation manner of the fourth aspect, in a third possible implementation manner of the fourth aspect, the synchronization module is specifically configured to:
synchronize the network resource information of each controller to a virtual machine, and use the virtual machine as a secondary controller of the controller; or
synchronize the network resource information of each controller to an entity apparatus corresponding to the controller, and use the entity apparatus as a secondary controller of the controller.

In the embodiments of the present invention, a controller cluster includes a subdomain controller and a parent controller, where the subdomain controller discovers and controls a subdomain network, and the parent controller controls a global network based on the subdomain controller. In this way, segmented and layered control can be performed on a network by using the controller cluster, to process dense information of a relatively large network in time, and avoid network congestion, controller breakdown, or the like.

### BRIEF DESCRIPTION OF DRAWINGS

FIG. 1 is a schematic diagram of an SDN network;
FIG. 2 is a flowchart of a network control method designed in an embodiment of the present invention;
FIG. 3 shows a relatively large layered network according to Embodiment 1 of the present invention;
FIG. 4A is a topology diagram of a subdomain network discovered by a subdomain controller TC1 according to Embodiment 1 of the present invention;
FIG. 4B is a topology diagram of a subdomain network discovered by a subdomain controller TC2 according to Embodiment 1 of the present invention;
FIG. 4C is a topology diagram of a subdomain network discovered by a subdomain controller TC3 according to Embodiment 1 of the present invention;
FIG. 4D is a topology diagram of a subdomain network discovered by a subdomain controller TC4 according to Embodiment 1 of the present invention;
FIG. 5 shows a cross-subdomain-network link determined by a super controller S-TC according to Embodiment 1 of the present invention;
FIG. 6 shows a full mesh topology acquired by a proxy server according to Embodiment 1 of the present invention;
FIG. 7 is an information exchange diagram when a subdomain controller TC1 becomes is faulty according to Embodiment 1 of the present invention;
FIG. 8 is a flowchart of another network control method according to an embodiment of the present invention;
FIG. 9 is a schematic diagram of a network control apparatus according to an embodiment of the present invention;
FIG. 10 is a schematic diagram of another network control apparatus according to an embodiment of the present invention;
FIG. 11 is a schematic diagram of a network control device according to an embodiment of the present invention; and
FIG. 12 is a schematic diagram of another network control device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

The following further describes the embodiments of the present invention in detail with reference to accompanying drawings in this specification.

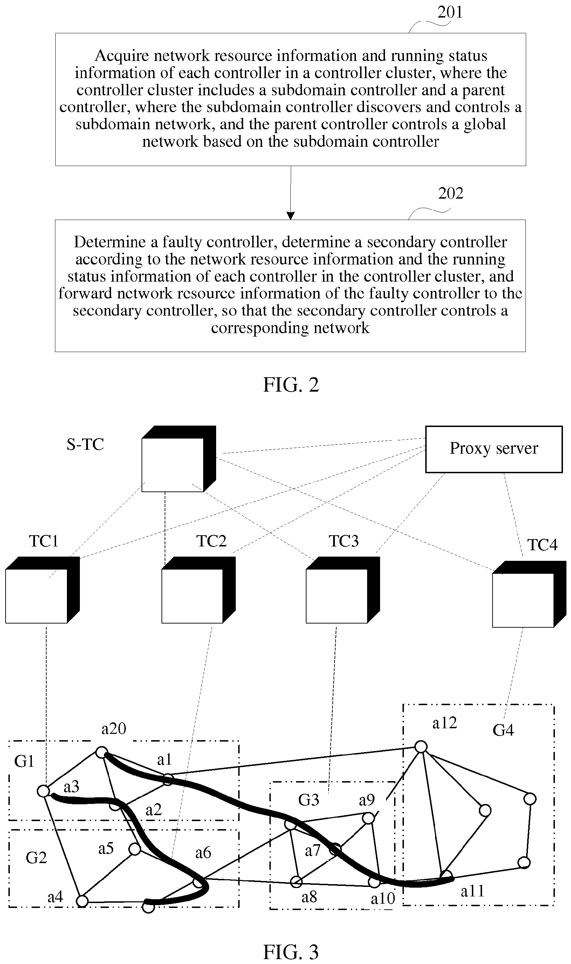

As shown in FIG. 2, a network control method designed in an embodiment of the present invention includes the following steps.

Step 201: Acquire network resource information and running status information of each controller in a controller cluster, where the controller cluster includes a subdomain controller and a parent controller, where the subdomain controller discovers and controls a subdomain network, and the parent controller controls a global network based on the subdomain controller.

Step 202: Determine a faulty controller, determine a secondary controller according to the network resource information and the running status information of each controller in the controller cluster, and forward network resource information of the faulty controller to the secondary controller, so that the secondary controller controls a corresponding network.

The foregoing steps 201 and 202 may be executed by a proxy server. The faulty controller may be one or more controllers, and the faulty controller may be a parent controller and/or a child controller.

In this embodiment of the present invention, a subdomain controller and a parent controller are collectively referred to as controllers. The parent controller in this embodiment of the present invention may be one controller, or may be multiple controllers.

In an actual application, according to different specific requirements, the secondary controller in this embodiment of the present invention may be a newly enabled controller, or may be a controller that is in an available state in the controller cluster. For example, if a running status of a controller that is running is good, and there are many available network resources (which can meet a backup requirement), the controller may be used as a controller that is in an available state. A reason for which a controller becomes faulty may be a hardware fault, or may be a software or system error; therefore, the secondary controller in this embodiment of the present invention may be a newly enabled or an entity apparatus that is running, or may be a virtual machine that is newly built or is running. Moreover, a quantity of secondary controllers in this embodiment of the present invention may be one or more.

In this embodiment of the present invention, a secondary controller may take over control over an entire subdomain network corresponding to a faulty subdomain controller, or the subdomain network may be divided into multiple partial subdomain networks, and different secondary controllers separately take over control over the multiple partial subdomain networks, to avoid excessive processing pressure added to a same secondary controller. Therefore, step 202 may further be implemented in the following manners:

When it is determined, according to the network resource information and the running status information of each controller in the controller cluster, that secondary controllers are N secondary controllers, the network resource information of the faulty controller is divided into N pieces of partial network resource information, and the N pieces of partial network resource information are separately sent to the N secondary controllers (for example, each piece of partial network resource information is sent to a corresponding secondary controller in a one-to-one correspondence manner), so that each secondary controller reconstructs and controls, according to acquired partial network resource information, a network controlled by the faulty controller, where N is a positive integer greater than 1.

For example, each secondary subdomain controller may reconstruct a subdomain network according to acquired partial network resource information, and control the subdomain network. In this case, the reconstructing and controlling, by a secondary subdomain controller according to acquired partial network resource information, a corresponding subdomain network may include, but is not limited to the following four cases:
Case one: The secondary controller has controlled a network previously; in this case, according to the partial network resource information, the secondary controller combines the original network with a partial network included in the partial network resource information, to reconstruct a new subdomain network, and controls the new subdomain network.
Case two: The secondary subdomain controller is a newly enabled controller and has been in a disabled (for example, sleep or shutdown) state previously; in this case, the secondary subdomain controller may directly reconstruct, into a new subdomain network, the partial subdomain network included in the partial network resource information, and control the new subdomain network.
Case three: The secondary subdomain controller has controlled a subdomain network previously; in this case, the secondary subdomain controller newly builds a virtual machine, reconstructs, into a new subdomain network by using the newly-built virtual machine, the partial subdomain network included in the partial network resource information, and controls the new subdomain network.
Case four: In a case in which a faulty subdomain controller is a virtual machine, a fault is caused by software, and an entity apparatus bearing the subdomain controller is still intact, a virtual machine is newly built as a secondary subdomain controller on the entity apparatus; in this case, the secondary subdomain controller may reconstruct a new subdomain network according to the partial subdomain network included in the partial network resource information, and control the new subdomain network.

If a proxy server determines that the faulty controller is a parent controller, and secondary controllers are multiple secondary parent controllers, the proxy server may divide the network resource information of the faulty controller into multiple parts, and separately send the multiple parts to the secondary parent controllers. In this case, partial network resource information acquired by each secondary parent controller may include a cross-subdomain link, link information reported by a subdomain controller, a cross-subdomain service route, and the like. In this way, each secondary parent controller may separately control several subdomain controllers according to the acquired partial network resource information, and separately reconstruct a corresponding global network. One parent controller may control several subdomain controllers, and acquire related information, reported by a subdomain controller controlled by the parent controller, of a subdomain network; therefore, a global network controlled by the parent controller may include a link that is reported by the subdomain controller controlled by the parent controller, a cross-subdomain link, and the like.

Preferably, the acquiring network resource information of each controller in a controller cluster may be implemented in the following specific manner:
synchronously acquiring a communication address, service information, and routing information that are of a node controlled by each controller in the controller cluster, where the synchronization process may be real-time synchronization, or may be periodic synchronization.

By using this manner, the proxy server may acquire network resource information and running status information of the controller cluster in time, and may implement dynamic protection on the controller cluster, thereby preventing network breakdown caused by a controller fault.

In an actual application, the network resource information of the controller in step 201 may include, but is not limited to: link resource information, node resource information, and a communication address, service information including a service route, routing information, and the like that are of a node controlled by the controller, and the running status information of the controller may include, but is not limited to a central processing unit (Central Processing Unit, central processing unit) utilization percentage and/or a memory utilization percentage, and the like.

In an actual application, the proxy server may determine a controller fault according to the following manners:
Manner 1: When controller application information is received, acquire a communication address of a node sending the controller application information, and determine a faulty controller according to the communication address of the node and the synchronously acquired network resource information of each controller in the controller cluster.
Manner 2: When it is determined that a session between the proxy server and a controller is interrupted, determine that the controller is a faulty controller.

In the foregoing manner 1, when the faulty controller is a subdomain controller, the controller application information may be sent by a device, in a subdomain network, disconnected from the subdomain controller; and when the faulty controller is a parent controller, the controller application information may be sent by a subdomain controller disconnected from the parent controller. The controller application information may include, but is not limited to: information such as communication address information of the faulty controller, and communication address information of a node sending the controller application information.

The faulty controller may be a subdomain controller, or may be a parent controller; therefore, processes for determining a secondary controller may be classified into the following two cases:
Case one: When the proxy server determines that the faulty controller is a subdomain controller, it is determined, according to the network resource information and the running status information of each controller in the controller cluster, that a secondary subdomain controller is a secondary controller, where the secondary subdomain controller is a newly enabled subdomain controller, or a subdomain controller that is in an available state in the controller cluster. The faulty controller may be one or more subdomain controllers, and the secondary subdomain controller may also be one or more subdomain controllers.
   In this case, the proxy server may forward the network resource information of the faulty controller to the secondary subdomain controller, allocate a communication address to the secondary subdomain controller according to the network resource information, and notify the communication address to a device in a subdomain network controlled by the faulty controller, so that the secondary subdomain controller controls the subdomain network controlled by the faulty controller. The subdomain network may include, but is not limited to: a device, a link, a service route, and the like that are in the subdomain network.
   After the proxy server allocates a communication address (for example, an IP address and a port number) to the secondary subdomain controller, the proxy server may instruct, in a manner not limited to the following two manners, the secondary subdomain controller to establish a connection to a device in a subdomain network controlled by the faulty controller:
   (1) Send a communication address of a device to the secondary subdomain controller, so that the secondary subdomain controller establishes a connection to the device based on the communication address of the device, and make a statement to the device that the secondary subdomain controller is responsible for the work of controlling the subdomain network, thereby controlling and managing the device. After establishing the connection successfully, the secondary subdomain controller may notify the proxy server that the secondary subdomain controller has implemented control over the device.
   (2) Send the communication address to a device in a corresponding subdomain network, so that the device in the subdomain network sends a new connection request to the secondary subdomain controller based on the communication address, thereby implementing management by the subdomain controller, and avoiding a problem of a network resource waste caused by device idleness. After the device establishes the connection to the secondary subdomain controller, the device may notify the proxy server of a message that the connection is established successfully.
Case two: When determining that the faulty controller is a parent controller, the proxy server determines, according to the network resource information and the running status information of each controller in the controller cluster, that a secondary parent controller is used as the secondary controller, where the secondary parent controller is a newly enabled parent controller, or a parent controller that is in an available state in the controller cluster.

In this case, network resource information of any controller may be forwarded to the secondary parent controller, a communication address is allocated to the secondary parent controller according to the network resource information, and the subdomain controller controlled by the faulty controller is notified of the communication address, so that the secondary parent controller controls a global network controlled by the faulty controller. The global network may include, but is not limited to: a cross-subdomain-network link, a virtual link reported by the subdomain controller, a cross-subdomain route including a cross-subdomain-network service route, and the like. The faulty controller may be one or more parent controllers, and the secondary parent controller may also be one or more parent controllers.

After the proxy server allocates a communication address (for example, an IP address and a port number) for the secondary parent controller, the proxy server may instruct, in a manner not limited to the following two manners, the secondary parent controller to establish a connection to a corresponding subdomain controller:
(1) Send a communication address of a subdomain controller to the secondary parent controller, so that the secondary parent controller establishes a connection to the subdomain controller based on the communication address of the subdomain controller, and make a statement to the subdomain controller that the secondary parent controller is responsible for the work of controlling a global network, thereby controlling and managing the subdomain controller. After establishing the connection successfully, the secondary parent controller may notify the proxy server that the secondary parent controller has implemented control over the subdomain controller.
(2) Send the communication address to a corresponding subdomain controller, so that the subdomain controller sends a new connection request to the secondary parent controller based on the communication address, thereby implementing management by the parent controller. After the subdomain controller establishes the connection to the secondary parent controller, the subdomain controller may notify the proxy server of a message that the connection is established successfully.

In this embodiment of the present invention, the subdomain controller is responsible for processing all network events in a corresponding subdomain network, topology discovery of the subdomain network, resource management of the subdomain network, and service path setup and service management in the subdomain network.

The parent controller may acquire a link, a virtual link, and service information in a subdomain network from the subdomain controller, where the virtual link refers to a logical connection channel between two nodes. The parent controller is responsible for discovery of a cross-subdomain-network link, and path setup and management of a cross-subdomain service, and the parent controller may also combine a link in a subdomain network controlled by the subdomain controller with a cross-subdomain-network link, so as to acquire a complete network topology.

In an actual application, assuming that the subdomain network controlled by the subdomain controller includes a link L1, where the link L1 is: node A-node B-node C, when reporting network resource information in the subdomain network to the parent controller, the subdomain controller may convert the link L1 into a virtual link L'1 (node A-node C). Assuming that the parent controller instructs the subdomain controller to transmit service data from node A to node D through a service path L2 (node A-node C-node D), the subdomain controller may convert a virtual link in the service path L2 into a link, and transmit the service data from node A to node D through a path (node A-node B-node C-node D).

The subdomain controller may select to report a virtual link (node A-node C) to the parent controller, so as to save a resource of the parent controller; or may directly report an actual link (node A-node B-node C) to the parent controller, so as to avoid conversion between the virtual link and the actual link. The subdomain controller may select to report the actual link and the virtual link in the subdomain network according to an actual requirement.

By using this manner, layered and segmented control may be implemented on a network. Because the subdomain controller controls the subdomain network, requirements for a processing capability and a capacity are not high, and the parent controller may receive and deliver information including a virtual link, to save a system resource, and reduce the requirements of the network for the processing capability and the capacity of the parent controller.

A process in which the parent controller determines a cross-subdomain-network link may be performed by using but not limited to the following manner:

The subdomain controller distributes ID information of the subdomain network to each device in the subdomain network, and the device in the subdomain network may discover, according to the ID information of the subdomain network, a link of which two end nodes belong to links of different subdomain network, and use the links as links of a cross-subdomain network.

For example, the device in the subdomain network may discover a cross-subdomain-network link based on a link discovery method of an optical network OTN overhead byte, discover, according to exchange of an autonomous system identifier (AS ID) field in an overhead byte, that IDs of subdomain networks where two ends of the link are located are different, thereby identifying a cross-subdomain-network link, and report the cross-subdomain-network link to the subdomain controller. The subdomain controller then reports, to the parent controller, the cross-subdomain-network link reported by the device, so that the parent controller determines the cross-subdomain-network link.

The following describes Embodiment 1 of the present invention with reference to FIG. 3.

Embodiment 1: As shown in FIG. 3, a relatively large network is divided into four subdomain networks G1, G2, G3, and G4. TC1, and TC2, TC3, and TC4 are four subdomain controllers separately. The subdomain controller TC1 controls a link in the subdomain network G1, the subdomain controller TC2 controls a link in the subdomain network G2, the subdomain controller TC3 controls a link in the subdomain network G3, and the subdomain controller TC4 controls a link in the subdomain network G4. A super controller S-TS is connected to each subdomain controller, and controls a cross-subdomain-network link.

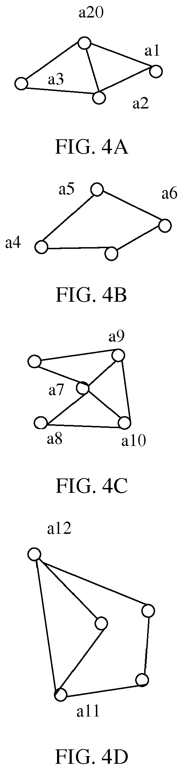

For a topology of the subdomain network discovered by the subdomain controller TC1 in Embodiment 1, refer to FIG. 4A. For a topology of the subdomain network discovered by the subdomain controller TC2 in Embodiment 1, refer to FIG. 4B. For a topology of the subdomain network discovered by the subdomain controller TC3 in Embodiment 1, refer to FIG. 4C. For a topology of the subdomain network discovered by the subdomain controller TC4 in Embodiment 1, refer to FIG. 4D.

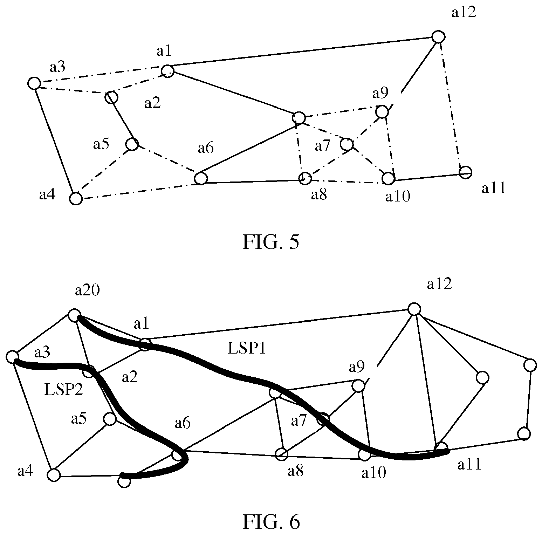

For a cross-subdomain-network link determined by the super controller S-TC in Embodiment 1, refer to FIG. 5. In FIG. 5, a solid line represents a cross-subdomain-network link, and a dotted line represents a link in a subdomain network.

As shown in FIG. 3, the proxy server in Embodiment 1 is connected to the super controller S-TC and each subdomain controller, and the proxy server synchronously acquires network resource information and running status information of the super controller S-TC and each subdomain controller. Each subdomain controller and the super controller S-TC may both synchronously send information such as information about links controlled by the subdomain controller and the super controller S-TC, service information including a service route, and running status information of the controllers to the proxy server, so that the proxy server acquires a complete network topology, network resource information, routing information, service information including a route, and running status information of each controller.

For the complete network topology acquired by the proxy server in Embodiment 1, refer to FIG. 6, where bold lines are separately complete service paths LSP1 and LSP2 acquired by the proxy server.

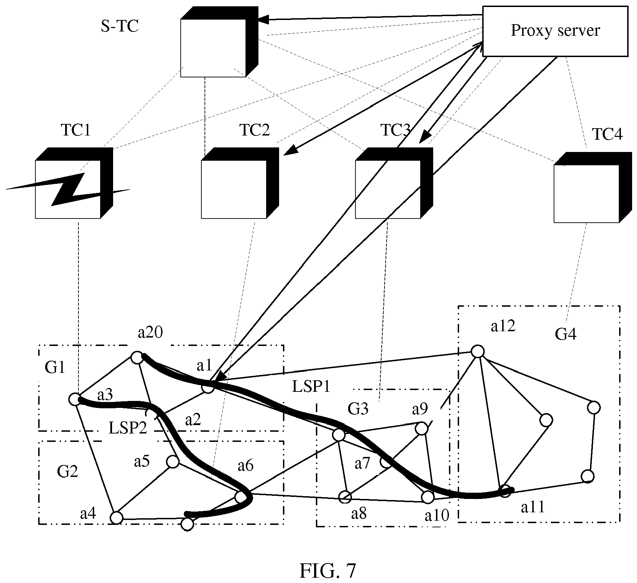

It is assumed that the subdomain controller TC1 becomes faulty. As shown in FIG. 7, when the subdomain controller TC1 becomes faulty, devices a1, a2, a3, and a20 controlled by the subdomain controller TC1 are all disconnected from the subdomain controller TC1; in this case, the device a1 establishes a connection to the proxy server according to a pre-stored Internet protocol (Internet Protocol, IP) address and port number that are of the proxy server, and sends controller application information to the proxy server, to apply for establishment of a connection to a new subdomain controller. The device a2 also establishes a connection to the proxy server according to a pre-stored IP address and port number that are of the proxy server, and sends controller application information to the proxy server, to apply for establishment of a connection to a new subdomain controller. The a3 also establishes a connection to the proxy server according to a pre-stored IP address and port number that are of the proxy server, and sends controller application information to the proxy server, to apply for a new subdomain controller. The a20 also establishes a connection to the proxy server according to a pre-stored IP address and port number that are of the proxy server, and sends controller application information to the proxy server, to apply for establishment of a connection to a new subdomain controller.

When receiving application information sent by a device, the proxy server determines that a subdomain controller is disconnected, and the proxy server obtains by means of analysis, based on a full mesh topology, network resource information, a service path, attribute data, and running status information of each subdomain controller that is running, that running statuses of the subdomain controllers TC2 and TC3 are good, and resource usage of the subdomain controllers TC2 and TC3 is relatively low (for example, a CPU usage percentage is relatively low and/or a memory utilization percentage is relatively low), and may allocate the devices a2 and a3 to the subdomain controller TC2, and allocate a20 and a1 to the subdomain controller TC3.

In this case, the proxy server sends a communication address (including an IP address and a port number) of the subdomain controller TC2 to the devices a2 and a3, and sends a communication address (including an IP address and a port number) of the subdomain controller TC3 to the devices a1 and a20. After receiving a communication address of a subdomain controller that is newly allocated by the proxy server, a device initiates a connection request to the newly allocated subdomain controller, so that the newly allocated subdomain controller can control and manage the device. The devices a2 and a3 are controlled by the subdomain controller TC2 and grouped into the subdomain network G2, and the devices a1 and a20 are controlled by the subdomain controller TC3 and grouped into the subdomain network G3.

The proxy server forwards the network resource information of the subdomain controller TC1 to the TC2 and the TC3, synchronizes a path of the cross-subdomain network G1 in the service path LSP1 to the TC3, and synchronizes a path of the cross-subdomain network G2 in the service path LSP2 to the TC2.

After the proxy server finishes allocating the new subdomain controller to the device, if the network topology and the network resource information change, the proxy server may notify the super controller S-TC of the changed network topology and network resource information, and re-adjust a service path by using the super controller S-TC.

Embodiment 2: Assuming that the parent controller becomes faulty, the subdomain controller disconnected from the parent controller sends controller application information to the proxy server, to apply for a new parent controller. The proxy server allocates a secondary parent controller to the faulty parent controller, where the secondary parent controller may be an originally disabled parent controller, or may be a parent controller that is currently running and has relatively many idle resources. The proxy server sends network resource information synchronized previously by using the faulty parent controller to the secondary parent controller, and sends a communication address of the secondary parent controller to the disconnected subdomain controller, so that the subdomain controller can establish a connection to the secondary parent controller, to manage and control the network cooperatively.

If the secondary parent controller is an originally disabled parent controller, the proxy server needs to first allocate a communication address to the secondary parent controller, and then sends the newly allocated communication address to the disconnected subdomain controller. If the secondary parent controller is a parent controller that is currently running and has relatively many idle resources, the proxy server may directly send the communication address of the secondary parent controller to the disconnected subdomain controller.

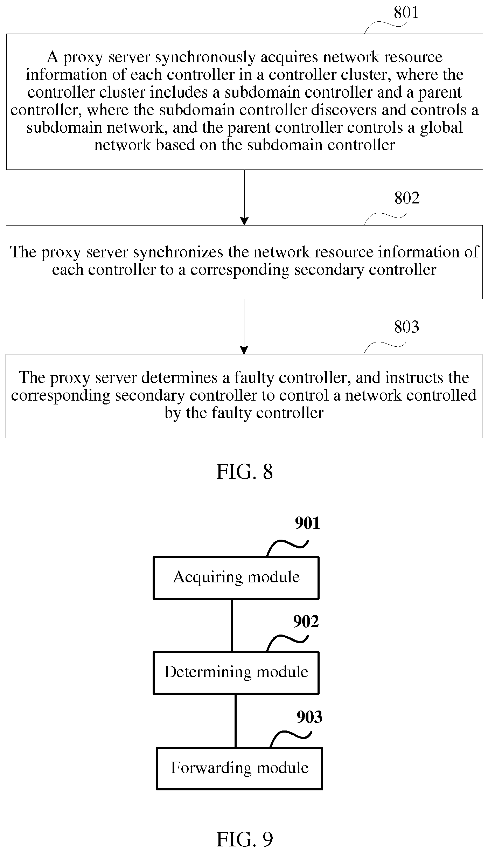

An embodiment of the present invention further designs a network control method, and as shown in FIG. 8, the method includes the following steps:
Step 801: A proxy server synchronously acquires network resource information of each controller in a controller cluster, where the controller cluster includes a subdomain controller and a parent controller, where the subdomain controller discovers and controls a subdomain network, and the parent controller controls a global network based on the subdomain controller.
Step 802: The proxy server synchronizes the network resource information of each controller to a corresponding secondary controller.
Step 803: The proxy server determines a faulty controller, and instructs the corresponding secondary controller to control a network controlled by the faulty controller.

The synchronization process of the foregoing step 802 may be real-time synchronization, or may be periodic synchronization.

In this embodiment of the present invention, a subdomain controller discovers and controls a subdomain network, and a parent controller controls a global network based on the subdomain controller, to perform segmented and layered control over a network by using a controller cluster, thereby processing dense information of a relatively large network in time, and avoiding network congestion, controller breakdown, or the like. Moreover, a secondary controller is configured for each controller, network resource information of the controller is synchronized to the secondary controller by using a proxy server. In this way, once a controller becomes faulty, the faulty controller may be replaced with a secondary controller in time, to control a corresponding network, and avoid network breakdown.

In an actual application, the network resource information includes at least service information and/or routing information.

That the proxy server synchronizes network resource information of each controller to a secondary controller may include, but is not limited to, the following two possibilities:
(1) The proxy server synchronizes network resource information, to the secondary controller, such as a communication address, a network topology, service information, and routing information of a node controlled by the controller.
   In this case, after determining the faulty controller, the proxy server may send a communication address of the secondary controller to a node controlled by the faulty controller, so that the node controlled by the faulty controller establishes a connection to the secondary controller, so that the secondary controller controls the node
   Before determining the faulty controller, the proxy server has synchronized, to the secondary controller, the communication address of the node controlled by the faulty controller; therefore, after determining the faulty controller, the proxy server may also directly instruct the secondary controller to control the node controlled by the faulty controller.
(2) If after determining the secondary controller, the proxy server directly makes the device establish a connection to both the primary controller and the secondary controller (the primary controller is used for a service, and the secondary controller only synchronously acquires data), so that the secondary controller learns network data information (such as a communication address and a network topology of a node) same as that of the primary controller, in this case, the proxy server may synchronize only the service information and the routing information to the secondary controller.

In this case, before the proxy server determines the faulty controller, the secondary controller has established a connection to a node controlled by the faulty controller; therefore, the proxy server may directly instruct the secondary controller to control the node controlled by the faulty controller.

The proxy server may further synchronously acquire running status information of each controller, for example, information such as a CPU utilization percentage and a memory utilization percentage, so as to know in time whether a status of each controller is close to a fault critical point.

Preferably, the proxy server may determine, in a manner not limited to the following two manners, that any controller becomes faulty:
when controller application information is received, acquiring a communication address of a node sending the controller application information, and determining the faulty controller according to the communication address of the node and the synchronously acquired network resource information of each controller in the controller cluster; or
when it is determined that a session between the proxy server and a controller is interrupted, determining that the controller is a faulty controller.

The foregoing step 2 may include, but is not limited to the following two implementation manners:
Manner 1: Synchronize the network resource information of each controller to a virtual machine, and use the virtual machine as a secondary controller of the controller.
   The virtual machine and the controller may be located in a same entity apparatus, or may be separately located in different entity apparatuses. When the virtual machine and the controller are located in different entity apparatuses, the virtual machine may be located in an entity apparatus alone, or the virtual machine and another controller may be located in a same entity apparatus, where the another controller is a controller in the controller cluster except the current controller.
Manner 2: Synchronize the network resource information of each controller to an entity apparatus corresponding to the controller, and use the entity apparatus as a secondary controller of the controller.

For example, in this embodiment of the present invention, to prevent network breakdown caused by a controller fault resulted from a software or system error, at least two virtual machines may further be prepared in advance in the entity apparatus, where one virtual machine is used as a controller to control a corresponding network. The proxy server synchronizes network information of the controller to the other virtual machine used as a secondary controller. In this way, when determining that a controller becomes faulty, the proxy server may immediately enable in time the secondary controller (a virtual machine) located in the same entity apparatus, to replace the faulty controller to control a corresponding network, thereby achieving an objective of preventing a disaster in time.

Based on the same design idea, an embodiment of the present invention further designs a network control apparatus, and as shown in FIG. 9, the apparatus includes:
an acquiring module 901, configured to acquire network resource information and running status information of each controller in a controller cluster, where the controller cluster includes a subdomain controller and a parent controller, where the subdomain controller discovers and controls a subdomain network, and the parent controller controls a global network based on the subdomain controller;
a determining module 902, configured to determine a faulty controller; and
a forwarding module 903, configured to determine a secondary controller according to the network resource information and the running status information of each controller in the controller cluster, and forward network resource information of the faulty controller to the secondary controller, so that the secondary controller controls a network controlled by the faulty controller.

Preferably, the acquiring module 901 is specifically configured to synchronously acquire a communication address, service information, routing information, and running status information that are of a node controlled by each controller in the controller cluster.

When acquiring network resource information of a subdomain controller, the acquiring module 901 may acquire a communication address, service information, and routing information that are of a device in a subdomain network controlled by the subdomain controller.

When acquiring network resource information of a parent controller, the acquiring module 901 may acquire a cross-subdomain link, a cross-subdomain route, and the like that are controlled by the parent controller.

In an actual application, the acquiring module 901 may acquire, by using a real-time synchronization manner, or by using a periodic synchronization manner, the communication address, the service information, and the routing information that are of a node controlled by each controller in the controller cluster.

Preferably, the forwarding module 903 may replace the faulty controller with N secondary controllers, which is specifically:

When determining, according to the network resource information and the running status information of each controller in the controller cluster, that secondary controllers are N secondary controllers, the forwarding module 903 divides the network resource information of the faulty controller into N pieces of partial network resource information, and separately sends the N pieces of partial network resource information to the N secondary subdomain controllers, so that each secondary subdomain controller reconstructs and controls, according to acquired partial network resource information, a network controlled by the faulty controller, where N is a positive integer greater than 1.

Preferably, the determining module 902 is specifically configured to:
when controller application information is received, acquire a communication address of a node sending the controller application information, and determine the faulty controller according to the communication address of the node and the synchronously acquired network resource information of each controller in the controller cluster; or
when it is determined that a session between the apparatus and a controller is interrupted, determine that the controller is a faulty controller.

The determining module 902 may further determine, according to the controller application information, or, faulty controller-related information stored by the apparatus, that the faulty controller is a parent controller and/or a child controller.

Preferably, the forwarding module may include a first submodule and a second submodule. The faulty controller may be a parent controller and/or a subdomain controller; therefore, based on different types of faulty controllers, the forwarding module 903 may be classified into, but is not limited to the following two types.

Type 1: the forwarding module 903 includes:
a first submodule, configured to: when the determining module 902 determines that the faulty controller is a subdomain controller, determine, according to the network resource information and the running status information of each controller in the controller cluster, that a secondary subdomain controller is used as a secondary controller, where the secondary subdomain controller is a newly enabled subdomain controller, or a subdomain controller that is in an available state in the controller cluster; and
a second submodule, configured to forward the network resource information of the faulty controller to the secondary controller, so that the secondary controller controls the network controlled by the faulty controller.

Preferably, the second submodule is specifically configured to:
forward the network resource information of the faulty controller to the secondary subdomain controller, allocate a communication address to the secondary subdomain controller according to the network resource information, and notify the communication address to a device in a subdomain network controlled by the faulty controller, so that the secondary subdomain controller controls the subdomain network controlled by the faulty controller.

Type 2: the forwarding module 903 includes:
a first submodule, configured to: when the determining module 902 determines that the faulty controller is a parent controller, determine, according to the network resource information and the running status information of each controller in the controller cluster, that a secondary parent controller is used as the secondary controller, where the secondary parent controller is a newly enabled parent controller, or a parent controller that is in an available state in the controller cluster; and
a second submodule, configured to forward the network resource information of the faulty controller to the secondary controller, so that the secondary controller controls the network controlled by the faulty controller.

Preferably, the second submodule is specifically configured to:
forward network resource information of any controller to the secondary parent controller, allocate a communication address to the secondary parent controller according to the network resource information, and notify the communication address to a subdomain controller controlled by the faulty controller, so that the secondary parent controller controls a global network controlled by the faulty controller.

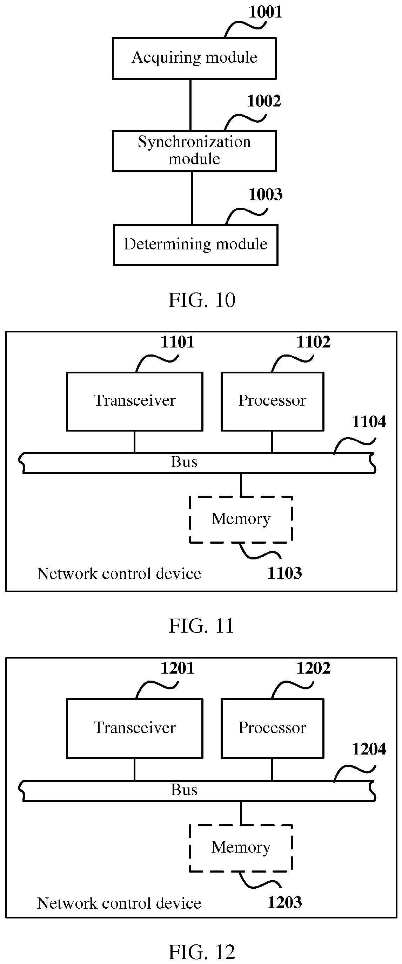

Based on the same design idea, an embodiment of the present invention further designs a network control apparatus, and as shown in FIG. 10, the apparatus includes:
an acquiring module 1001, configured to synchronously acquire network resource information of each controller in a controller cluster, where the controller cluster includes a subdomain controller and a parent controller, where the subdomain controller discovers and controls a subdomain network, and the parent controller controls a global network based on the subdomain controller;
a synchronization module 1002, configured to synchronize the network resource information of each controller to a corresponding secondary controller; and
a determining module 1003, configured to determine a faulty controller, and instruct the corresponding secondary controller to control a network controlled by the faulty controller.

Preferably, the network resource information includes at least service information and/or routing information. According to different actual cases, content included by the network resource information may be different.

For example, the network resource information may include: a communication address, a network topology, service information, and routing information that are of a node. In this case, after the primary controller becomes faulty, the determining module 1003 may further send a communication address of the secondary controller to a node controlled by the faulty controller, so that the node controlled by the faulty controller establishes a connection to the secondary controller, so that the secondary controller controls the node, or the determining module 1003 may also directly instruct the secondary controller to establish a connection to a corresponding node according to the communication address of the node included in the network resource information, and control the corresponding node.

For another example, the network resource information may include service information and routing information, but do not include network data information (such as a communication address and a network topology that are of a node). In this case, after determining the secondary controller, the proxy server directly makes the device establish a connection to both the primary controller and the secondary controller, so that the secondary controller learns network data information same as that of the primary controller (the primary controller is used for a service, and the secondary controller only synchronously acquires data); therefore, the synchronization module 1002 may synchronize the service information and the routing information to the secondary controller without synchronizing network data information of the faulty controller to the secondary controller. Once the primary controller becomes faulty, the secondary controller is instructed to control a node controlled by the faulty controller.

Preferably, the determining module 1003 is specifically configured to:
when controller application information is received, acquire a communication address of a node sending the controller application information, determine the faulty controller according to the communication address of the node and the synchronously acquired network resource information of each controller in the controller cluster, and instruct a corresponding secondary controller to control a network controlled by the faulty controller; or
when it is determined that a session between the apparatus and the controller is interrupted, determine that the controller is a faulty controller, and instruct a corresponding secondary controller to control a network controlled by the faulty controller.

Preferably, the synchronization module 1002 is specifically configured to:
synchronize the network resource information of each controller to a virtual machine, and use the virtual machine as a secondary controller of the controller; or
synchronize the network resource information of each controller to an entity apparatus corresponding to the controller, and use the entity apparatus as a secondary controller of the controller.

Based on the same design idea, an embodiment of the present invention further designs a network control device, and as shown in FIG. 11, the device specifically includes: a transceiver 1101, a processor 1102, a memory 1103, and a bus 1104, where the wireless transceiver 1101, the processor 1102, and the memory 1103 are connected and communicate with each other by using the bus 1104.

The transceiver 1101 is mainly configured to implement information exchange with nodes (a controller and a device) in this embodiment.

Specifically, the transceiver 1101 is configured to acquire network resource information and running status information of each controller in a controller cluster, where the controller cluster includes a subdomain controller and a parent controller, where the subdomain controller discovers and controls a subdomain network, and the parent controller controls a global network based on the subdomain controller.

The processor 1102 is configured to invoke program code in the memory 1103, so as to execute the following operations:
determine a faulty controller, determine a secondary controller according to the network resource information and the running status information of each controller in the controller cluster, and forward network resource information of the faulty controller to the secondary controller by using the transceiver 1101, so that the secondary controller controls a network controlled by the faulty controller.

As shown in FIG. 12, an embodiment of the present invention further designs a network control device, which specifically includes: a transceiver 1201, a processor 1202, a memory 1203, and a bus 1204, where the wireless transceiver 1201, the processor 1202, and the memory 1203 are connected and communicate with each other by using the bus 1204.

The transceiver 1201is mainly configured to implement information exchange with nodes (a controller and a device) in this embodiment.

Specifically, the transceiver 1201is configured to acquire network resource information and running status information of each controller in a controller cluster, where the controller cluster includes a subdomain controller and a parent controller, where the subdomain controller discovers and controls a subdomain network, and the parent controller controls a global network based on the subdomain controller.

The processor 1202is configured to invoke program code in the memory 1203, so as to execute the following operations:
determine a faulty controller, determine a secondary controller according to the network resource information and the running status information of each controller in the controller cluster, and forward network resource information of the faulty controller to the secondary controller by using the transceiver 1201, so that the secondary controller controls a network controlled by the faulty controller.

In this embodiment of the present invention, the bus (the bus 1104 or the bus 1204) may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be an address bus, a data bus, a control bus, or the like. For ease of representation, only one line in FIG. 11 and FIG. 12 is used to represent a bus, but it does not mean that there is only one bus or one type of bus.

The memory (the memory 1103 or the memory 1203) is configured to store program code, where the program code includes an operation instruction. The memory may include a high-speed random access memory (random access memory, RAM), or may include a non-volatile memory (non-volatile memory), for example, a magnetic disk storage.

The processor (the processor 1102 or the processor 1202) may be a central processing unit (Central Processing Unit, CPU), or may be an application specific integrated circuit (Application Specific Integrated Circuit, ASIC), or be configured as one or more integrated circuits for implementing the embodiments of the present invention.

In this embodiment of the present invention, a controller cluster includes a subdomain controller and a parent controller, where the subdomain controller discovers and controls a link in a subdomain network, and the parent controller controls a cross-subdomain-network link based on the subdomain controller. In this way, segmented and layered control can be performed on a network by using the controller cluster, to process dense information of a relatively large network in time, and avoid network congestion, controller breakdown, or the like.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of present invention. The present invention is intended to cover these modifications and variations provided that they fall within the scope of protection defined by the following claims and their equivalent technologies.

## Claims

1. A network control method for software defined networks, comprising:
acquiring (201), by a proxy server, network resource information and running status information of each controller in a controller cluster, wherein the controller cluster comprises a plurality of subdomain controllers and at least one parent controller, wherein each subdomain controller discovers and controls a subdomain network of a software defined network, and the at least one parent controller controls a global network based on the subdomain controller; and
determining (202), by said proxy server, a faulty controller, determining a secondary controller according to the network resource information and the running status information of each controller in the controller cluster, and forwarding network resource information of the faulty controller to the secondary controller, so that the secondary controller controls a network controlled by the faulty controller;
wherein the determining a secondary controller according to the network resource information and the running status information of each controller in the controller cluster, and forwarding network resource information of the faulty controller to the secondary controller, so that the secondary controller controls a corresponding network further comprises:
when it is determined, according to the network resource information and the running status information of each controller in the controller cluster, that secondary controllers are N secondary subdomain controllers, dividing the network resource information of the faulty controller into N pieces of partial network resource information, and separately sending the N pieces of partial network resource information to the N secondary subdomain controllers, so that each secondary subdomain controller reconstructs and controls, according to acquired partial network resource information, a partial subdomain network, wherein the network controlled by the faulty controller is divided into N partial subdomain networks, and wherein N is a positive integer greater than 1.

2. The method according to claim 1, wherein the acquiring network resource information of each controller in a controller cluster specifically comprises:
synchronously acquiring a communication address, service information, and routing information that are of a node controlled by each controller in the controller cluster.

3. The method according to claim 1 or 2, wherein the determining a faulty controller specifically comprises:
when controller application information is received, acquiring a communication address of a node sending the controller application information, and determining the faulty controller according to the communication address of the node and the synchronously acquired network resource information of each controller in the controller cluster; or
when it is determined that a session between a proxy server and a controller is interrupted, determining that the controller is a faulty controller.

4. The method according to any one of claims 1 to 3, wherein the faulty controller is a subdomain controller, and the determining a secondary controller according to the network resource information and the running status information of each controller in the controller cluster specifically comprises:
determining, according to the network resource information and the running status information of each controller in the controller cluster, that a secondary subdomain controller is used as a secondary controller, wherein the secondary subdomain controller is a newly enabled subdomain controller, or a subdomain controller that is in an available state in the controller cluster.

5. The method according to claim 4, wherein the forwarding network resource information of the faulty controller to the secondary controller, so that the secondary controller controls a network controlled by the faulty controller specifically comprises:
forwarding the network resource information of the faulty controller to the secondary subdomain controller, allocating a communication address to the secondary subdomain controller according to the network resource information, and notifying the communication address to a device in a subdomain network controlled by the faulty controller, so that the secondary subdomain controller controls the subdomain network controlled by the faulty controller.

6. The method according to any one of claims 1 to 5, further comprising, wherein the faulty controller is a parent controller, and the determining a secondary controller according to the network resource information and the running status information of each controller in the controller cluster specifically comprises:
determining, according to the network resource information and the running status information of each controller in the controller cluster, that a secondary parent controller is used as the secondary controller, wherein the secondary parent controller is a newly enabled parent controller, or a parent controller that is in an available state in the controller cluster.

7. The method according to claim 6, wherein the forwarding network resource information of the faulty controller to the secondary controller, so that the secondary controller controls a network controlled by the faulty controller specifically comprises:
forwarding network resource information of any controller to the secondary parent controller, allocating a communication address to the secondary parent controller according to the network resource information, and notifying the communication address to a subdomain controller controlled by the faulty controller, so that the secondary parent controller controls a global network controlled by the faulty controller.

8. A network control apparatus for software defined networks, comprising:
an acquiring module (901), configured to acquire network resource information and running status information of each controller in a controller cluster, wherein the controller cluster comprises a plurality of subdomain controllers and at least one parent controller, wherein each subdomain controller discovers and controls a subdomain network of a software defined network, and the at least one parent controller controls a global network based on the subdomain controller;
a determining module (902), configured to determine a faulty controller; and
a forwarding module (903), configured to determine a secondary controller according to the network resource information and the running status information of each controller in the controller cluster, and forward network resource information of the faulty controller to the secondary controller, so that the secondary controller controls a network controlled by the faulty controller;
wherein the forwarding module is further configured to:
when it is determined, according to the network resource information and the running status information of each controller in the controller cluster, that secondary controllers are N secondary subdomain controllers, divide the network resource information of the faulty controller into N pieces of partial network resource information, and separately send the N pieces of partial network resource information to the N secondary subdomain controllers, so that each secondary subdomain controller reconstructs and controls, according to acquired partial network resource information, a partial subdomain network, wherein the network controlled by the faulty controller is divided into N partial subdomain networks, and wherein N is a positive integer greater than 1.

9. The apparatus according to claim 9, wherein the acquiring module is specifically configured to:
synchronously acquire a communication address, service information, routing information, and running status information that are of a node controlled by each controller in the controller cluster.

10. The apparatus according to claim 8 or 9, wherein the determining module is specifically configured to:
when controller application information is received, acquire a communication address of a node sending the controller application information, and determine the faulty controller according to the communication address of the node and the synchronously acquired network resource information of each controller in the controller cluster; or
when it is determined that a session between the apparatus and a controller is interrupted, determine that the controller is a faulty controller.

11. The apparatus according to any one of claims 8 to 10, wherein the forwarding module comprises:
a first submodule, configured to: when the determining module determines that the faulty controller is a subdomain controller, determine, according to the network resource information and the running status information of each controller in the controller cluster, that a secondary subdomain controller is used as a secondary controller, wherein the secondary subdomain controller is a newly enabled subdomain controller, or a subdomain controller that is in an available state in the controller cluster; and
a second submodule, configured to forward the network resource information of the faulty controller to the secondary controller, so that the secondary controller controls the network controlled by the faulty controller.

12. The apparatus according to claim 11, wherein the second submodule is specifically configured to:
forward the network resource information of the faulty controller to the secondary subdomain controller, allocate a communication address to the secondary subdomain controller according to the network resource information, and notify the communication address to a device in a subdomain network controlled by the faulty controller, so that the secondary subdomain controller controls the subdomain network controlled by the faulty controller.

13. The apparatus according to any one of claims 8 to 11, wherein the forwarding module further comprises:
a first submodule, configured to: when the determining module determines that the faulty controller is a parent controller, determine, according to the network resource information and the running status information of each controller in the controller cluster, that a secondary parent controller is used as the secondary controller, wherein the secondary parent controller is a newly enabled parent controller, or a parent controller that is in an available state in the controller cluster; and
a second submodule, configured to forward the network resource information of the faulty controller to the secondary controller, so that the secondary controller controls the network controlled by the faulty controller.

14. The apparatus according to claim 13, wherein the second submodule is specifically configured to:
forward network resource information of any controller to the secondary parent controller, allocate a communication address to the secondary parent controller according to the network resource information, and notify the communication address to a subdomain controller controlled by the faulty controller, so that the secondary parent controller controls a global network controlled by the faulty controller.

## Patentansprüche

1. Netzwerksteuerungsverfahren für softwaredefinierte Netzwerke, umfassend:
Erfassen (201), durch einen Proxy-Server, von Netzwerkressourceninformationen und Betriebsstatusinformationen jeder Steuerung in einem Steuerungs-Cluster, wobei der Steuerungs-Cluster mehrere Subdomänen-Steuerungen und mindestens eine "Parent"-Steuerung umfasst, wobei jede Subdomänen-Steuerung ein Subdomänen-Netzwerk eines softwaredefinierten Netzwerks feststellt und steuert und die mindestens eine "Parent"-Steuerung ein globales Netzwerk basierend auf der Subdomänen-Steuerung steuert; und
Bestimmen (202), durch den Proxy-Server, einer fehlerhaften Steuerung, Bestimmen einer Sekundärsteuerung gemäß den Netzwerkressourceninformationen und den Betriebsstatusinformationen jeder Steuerung im Steuerungs-Cluster und Weiterleiten von Netzwerkressourceninformationen der fehlerhaften Steuerung zur Sekundärsteuerung, so dass die Sekundärsteuerung ein durch die fehlerhafte Steuerung gesteuertes Netzwerk steuert;
wobei das Bestimmen einer Sekundärsteuerung gemäß den Netzwerkressourceninformationen und den Betriebsstatusinformationen jeder Steuerung im Steuerungs-Cluster und das Weiterleiten von Netzwerkressourceninformationen der fehlerhaften Steuerung zur Sekundärsteuerung, so dass die Sekundärsteuerung ein entsprechendes Netzwerk steuert, ferner Folgendes umfasst:
wenn bestimmt wird, gemäß den Netzwerkressourceninformationen und den Betriebsstatusinformationen jeder Steuerung im Steuerungs-Cluster, dass die Sekundärsteuerungen N Subdomänen-Sekundärsteuerungen sind, Unterteilen der Netzwerkressourceninformationen der fehlerhaften Steuerung in N Teile von partiellen Netzwerkressourceninformationen und separates Senden der N Teile von partiellen Netzwerkressourceninformationen zu den N Subdomänen-Sekundärsteuerungen, so dass jede Subdomänen-Sekundärsteuerung ein partielles Subdomänen-Netzwerk gemäß den erfassten partiellen Netzwerkressourceninformationen rekonstruiert und steuert, wobei das durch die fehlerhafte Steuerung gesteuerte Netzwerk in N partielle Subdomänen-Netzwerke unterteilt wird und wobei N eine positive ganze Zahl größer als 1 ist.

2. Verfahren nach Anspruch 1, wobei das Erfassen von Netzwerkressourceninformationen jeder Steuerung in einem Steuerungs-Cluster spezifisch Folgendes umfasst:
synchrones Erfassen einer Kommunikationsadresse, von Dienstinformationen und von Routing-Informationen eines Knotens, der durch jede Steuerung im Steuerungs-Cluster gesteuert wird.

3. Verfahren nach Anspruch 1 oder 2, wobei das Bestimmen einer fehlerhaften Steuerung spezifisch Folgendes umfasst:
wenn Steuerungsanwendungsinformationen empfangen werden, Erfassen einer Kommunikationsadresse eines Knotens, der die Steuerungsanwendungsinformationen sendet, und Bestimmen der fehlerhaften Steuerung gemäß der Kommunikationsadresse des Knotens und den synchron erfassten Netzwerkressourceninformationen jeder Steuerung im Steuerungs-Cluster; oder
wenn bestimmt wird, dass eine Sitzung zwischen einem Proxy-Server und einer Steuerung unterbrochen wird, Bestimmen, dass die Steuerung eine fehlerhafte Steuerung ist.

4. Verfahren nach einem der Ansprüche 1 bis 3, wobei die fehlerhafte Steuerung eine Subdomänen-Steuerung ist und das Bestimmen einer Sekundärsteuerung gemäß den Netzwerkressourceninformationen und den Betriebsstatusinformationen jeder Steuerung im Steuerungs-Cluster spezifisch Folgendes umfasst:
Bestimmen, gemäß den Netzwerkressourceninformationen und den Betriebsstatusinformationen jeder Steuerung im Steuerungs-Cluster, dass eine Subdomänen-Sekundärsteuerung als eine Sekundärsteuerung verwendet wird, wobei die Subdomänen-Sekundärsteuerung eine neu freigegebene Subdomänen-Steuerung oder eine Subdomänen-Steuerung, die sich in einem verfügbaren Zustand befindet, im Steuerungs-Cluster ist.

5. Verfahren nach Anspruch 4, wobei das Weiterleiten von Netzwerkressourceninformationen der fehlerhaften Steuerung zur Sekundärsteuerung, so dass die Sekundärsteuerung ein durch die fehlerhafte Steuerung gesteuertes Netzwerk steuert, spezifisch Folgendes umfasst:
Weiterleiten der Netzwerkressourceninformationen der fehlerhaften Steuerung zur Subdomänen-Sekundärsteuerung, Zuweisen einer Kommunikationsadresse zur Subdomänen-Sekundärsteuerung gemäß den Netzwerkressourceninformationen und Melden der Kommunikationsadresse zu einer Einrichtung in einem durch die fehlerhafte Steuerung gesteuerten Subdomänen-Netzwerk, so dass die Subdomänen-Sekundärsteuerung das durch die fehlerhafte Steuerung gesteuerte Subdomänen-Netzwerk steuert.

6. Verfahren nach einem der Ansprüche 1 bis 5, das ferner umfasst, wobei die fehlerhafte Steuerung eine "Parent"-Steuerung ist, und das Bestimmen einer Sekundärsteuerung gemäß den Netzwerkressourceninformationen und den Betriebsstatusinformationen jeder Steuerung im Steuerungs-Cluster spezifisch Folgendes umfasst:
Bestimmen, gemäß den Netzwerkressourceninformationen und den Betriebsstatusinformationen jeder Steuerung im Steuerungs-Cluster, dass eine "Parent"-Sekundärsteuerung als die Sekundärsteuerung verwendet wird, wobei die "Parent"-Sekundärsteuerung eine neu freigegebene "Parent"-Steuerung oder eine "Parent"-Steuerung, die sich in einem verfügbaren Zustand befindet, im Steuerungs-Cluster ist.

7. Verfahren nach Anspruch 6, wobei das Weiterleiten der Netzwerkressourceninformationen der fehlerhaften Steuerung zur Sekundärsteuerung, so dass die Sekundärsteuerung ein durch die fehlerhafte Steuerung gesteuertes Netzwerk steuert, spezifisch Folgendes umfasst:
Weiterleiten von Netzwerkressourceninformationen einer beliebigen Steuerung zur "Parent"-Sekundärsteuerung, Zuweisen einer Kommunikationsadresse zur "Parent"-Sekundärsteuerung gemäß den Netzwerkressourceninformationen und Melden der Kommunikationsadresse zu einer durch die fehlerhafte Steuerung gesteuerte Subdomänen-Steuerung, so dass die "Parent"-Sekundärsteuerung ein durch die fehlerhafte Steuerung gesteuertes globales Netzwerk steuert.

8. Netzwerksteuerungsvorrichtung für softwaredefinierte Netzwerke, umfassend:
ein Erfassungsmodul (901), das zum Erfassen von Netzwerkressourceninformationen und Betriebsstatusinformationen jeder Steuerung in einem Steuerungs-Cluster konfiguriert ist, wobei der Steuerungs-Cluster mehrere Subdomänen-Steuerungen und mindestens eine "Parent"-Steuerung umfasst, wobei jede Subdomänen-Steuerung ein Subdomänen-Netzwerk eines softwaredefinierten Netzwerks feststellt und steuert und die mindestens eine "Parent"-Steuerung ein globales Netzwerk basierend auf der Subdomänen-Steuerung steuert;
ein Bestimmungsmodul (902), das zum Bestimmen einer fehlerhaften Steuerung konfiguriert ist; und
ein Weiterleitungsmodul (903), das zum Bestimmen einer Sekundärsteuerung gemäß den Netzwerkressourceninformationen und den Betriebsstatusinformationen jeder Steuerung im Steuerungs-Cluster und zum Weiterleiten von Netzwerkressourceninformationen der fehlerhaften Steuerung zur Sekundärsteuerung, so dass die Sekundärsteuerung ein durch die fehlerhafte Steuerung gesteuertes Netzwerk steuert, konfiguriert ist;
wobei das Weiterleitungsmodul ferner zu Folgendem konfiguriert ist:
wenn bestimmt wird, gemäß den Netzwerkressourceninformationen und den Betriebsstatusinformationen jeder Steuerung im Steuerungs-Cluster, dass die Sekundärsteuerungen N Subdomänen-Sekundärsteuerungen sind, Unterteilen der Netzwerkressourceninformationen der fehlerhaften Steuerung in N Teile von partiellen Netzwerkressourceninformationen und separates Senden der N Teile von partiellen Netzwerkressourceninformationen zu den N Subdomänen-Sekundärsteuerungen, so dass jede Subdomänen-Sekundärsteuerung ein partielles Subdomänen-Netzwerk gemäß den erfassten partiellen Netzwerkressourceninformationen rekonstruiert und steuert, wobei das durch die fehlerhafte Steuerung gesteuerte Netzwerk in N partielle Subdomänen-Netzwerke unterteilt wird und wobei N eine positive ganze Zahl größer als 1 ist.

9. Vorrichtung nach Anspruch 9, wobei das Erfassungsmodul spezifisch zu Folgendem konfiguriert ist:
synchrones Erfassen einer Kommunikationsadresse, von Dienstinformationen, von Routing-Informationen und von Betriebsstatusinformationen eines Knotens, der durch jede Steuerung im Steuerungs-Cluster gesteuert wird.

10. Vorrichtung nach Anspruch 8 oder 9, wobei das Bestimmungsmodul spezifisch zu Folgendem konfiguriert ist:
wenn Steuerungsanwendungsinformationen empfangen werden, Erfassen einer Kommunikationsadresse eines Knotens, der die Steuerungsanwendungsinformationen sendet, und Bestimmen der fehlerhaften Steuerung gemäß der Kommunikationsadresse des Knotens und den synchron erfassten Netzwerkressourceninformationen jeder Steuerung im Steuerungs-Cluster; oder
wenn bestimmt wird, dass eine Sitzung zwischen der Vorrichtung und einer Steuerung unterbrochen wird, Bestimmen, dass die Steuerung eine fehlerhafte Steuerung ist.

11. Vorrichtung nach einem der Ansprüche 8 bis 10, wobei das Weiterleitungsmodul Folgendes umfasst:
ein erstes Submodul, das, wenn das Bestimmungsmodul bestimmt, dass die fehlerhafte Steuerung eine Subdomänen-Steuerung ist, zum Bestimmen, gemäß den Netzwerkressourceninformationen und den Betriebsstatusinformationen jeder Steuerung im Steuerungs-Cluster, dass eine Subdomänen-Sekundärsteuerung als eine Sekundärsteuerung verwendet wird, konfiguriert ist, wobei die Subdomänen-Sekundärsteuerung eine neu freigegebene Subdomänen-Steuerung oder eine Subdomänen-Steuerung, die sich in einem verfügbaren Zustand befindet, im Steuerungs-Cluster ist; und
ein zweites Submodul, das zum Weiterleiten der Netzwerkressourceninformationen der fehlerhaften Steuerung zur Sekundärsteuerung, so dass die Sekundärsteuerung das durch die fehlerhafte Steuerung gesteuerte Netzwerk steuert, konfiguriert ist.

12. Vorrichtung nach Anspruch 11, wobei das zweite Submodul spezifisch zu Folgendem konfiguriert ist:
Weiterleiten der Netzwerkressourceninformationen der fehlerhaften Steuerung zur Subdomänen-Sekundärsteuerung, Zuweisen einer Kommunikationsadresse zur Subdomänen-Sekundärsteuerung gemäß den Netzwerkressourceninformationen und Melden der Kommunikationsadresse zu einer Einrichtung in einem durch die fehlerhafte Steuerung gesteuerten Subdomänen-Netzwerk, so dass die Subdomänen-Sekundärsteuerung das durch die fehlerhafte Steuerung gesteuerte Subdomänen-Netzwerk steuert.

13. Vorrichtung nach einem der Ansprüche 8 bis 11, wobei das Weiterleitungsmodul ferner Folgendes umfasst:
ein erstes Submodul, das, wenn das Bestimmungsmodul bestimmt, dass die fehlerhafte Steuerung eine "Parent"-Steuerung ist, zum Bestimmen, gemäß den Netzwerkressourceninformationen und den Betriebsstatusinformationen jeder Steuerung im Steuerungs-Cluster, dass eine "Parent"-Sekundärsteuerung als die Sekundärsteuerung verwendet wird, konfiguriert ist, wobei die "Parent"-Sekundärsteuerung eine neu freigegebene "Parent"-Steuerung oder eine "Parent"-Steuerung, die sich in einem verfügbaren Zustand befindet, im Steuerungs-Cluster ist; und
ein zweites Submodul, das zum Weiterleiten der Netzwerkressourceninformationen der fehlerhaften Steuerung zur Sekundärsteuerung, so dass die Sekundärsteuerung das durch die fehlerhafte Steuerung gesteuerte Netzwerk steuert, konfiguriert ist.

14. Vorrichtung nach Anspruch 13, wobei das zweite Submodul spezifisch zu Folgendem konfiguriert ist:
Weiterleiten von Netzwerkressourceninformationen einer beliebigen Steuerung zur "Parent"-Sekundärsteuerung, Zuweisen einer Kommunikationsadresse zur "Parent"-Sekundärsteuerung gemäß den Netzwerkressourceninformationen und Melden der Kommunikationsadresse zu einer durch die fehlerhafte Steuerung gesteuerte Subdomänen-Steuerung, so dass die "Parent"-Sekundärsteuerung ein durch die fehlerhafte Steuerung gesteuertes globales Netzwerk steuert.

## Revendications

1. Procédé de contrôle de réseau pour réseaux définis par logiciel, consistant à :
acquérir (201), par un serveur proxy, une information de ressource de réseau et une information de statut d'exécution de chaque contrôleur dans une grappe de contrôleurs, la grappe de contrôleurs comprenant une pluralité de contrôleurs de sous-domaine et au moins un contrôleur parent, chaque contrôleur de sous-domaine découvrant et contrôlant un réseau de sous-domaine d'un réseau défini par logiciel, et l'au moins un contrôleur parent contrôlant un réseau global sur la base du contrôleur de sous-domaine ; et
déterminer (202), par ledit serveur proxy, un contrôleur défectueux, déterminer un contrôleur secondaire selon l'information de ressource de réseau et l'information de statut d'exécution de chaque contrôleur dans la grappe de contrôleurs, et transférer l'information de ressource de réseau du contrôleur défectueux au contrôleur secondaire, de sorte que le contrôleur secondaire contrôle un réseau contrôlé par le contrôleur défectueux ;
la détermination d'un contrôleur secondaire selon l'information de ressource de réseau et l'information de statut d'exécution de chaque contrôleur dans la grappe de contrôleurs, et le transfert de l'information de ressource de réseau du contrôleur défectueux au contrôleur secondaire, de sorte que le contrôleur secondaire contrôle un réseau corres pondant, consistant en outre à :
quand il est déterminé, selon l'information de ressource de réseau et l'information de statut d'exécution de chaque contrôleur dans la grappe de contrôleurs, que des contrôleurs secondaires sont N contrôleurs de sous-domaine secondaires, diviser l'information de ressource de réseau du contrôleur défectueux en N parties d'information de ressource de réseau partielle, et envoyer séparément les N parties d'information de ressource de réseau partielle aux N contrôleurs de sous-domaine secondaires, de sorte que chaque contrôleur de sous-domaine secondaire reconstruise et contrôle, selon les informations de ressource de réseau partielles acquises, un réseau de sous-domaine partiel, le réseau contrôlé par le contrôleur défectueux étant divisé en N réseaux de sous-domaine partiels, et N étant un entier positif supérieur à 1.

2. Procédé selon la revendication 1, dans lequel l'acquisition de l'information de ressource de réseau de chaque contrôleur dans une grappe de contrôleurs, consiste en particulier à :
acquérir de manière synchrone une adresse de communication, une information de service et une information de routage appartenant à un noeud contrôlé par chaque contrôleur dans une grappe de contrôleurs.

3. Procédé selon la revendication 1 ou 2, dans lequel la détermination d'un contrôleur défectueux consiste en particulier à :
quand une information d'application de contrôleur est reçue, acquérir une adresse de communication d'un noeud envoyant l'information d'application de contrôleur, et déterminer le contrôleur défectueux selon l'adresse de communication du noeud et l'information de ressource de réseau acquise de manière synchrone de chaque contrôleur dans la grappe de contrôleurs ; ou
quand il est déterminé qu'une session entre un serveur proxy et un contrôleur est interrompue, déterminer que le contrôleur est un contrôleur défectueux.

4. Procédé selon l'une quelconque des revendications 1 à 3, dans lequel le contrôleur défectueux est un contrôleur de sous-domaine, et dans lequel la détermination d'un contrôleur secondaire selon l'information de ressource de réseau et l'information de statut d'exécution de chaque contrôleur dans la grappe de contrôleurs, consiste en particulier à :
déterminer, selon l'information de ressource de réseau et l'information de statut d'exécution de chaque contrôleur dans la grappe de contrôleurs, qu'un contrôleur de sous-domaine secondaire est utilisé en guise de contrôleur secondaire, le contrôleur de sous-domaine secondaire étant un contrôleur de sous-domaine récemment activé ou un contrôleur de sous-domaine étant dans un état disponible dans la grappe de contrôleurs.

5. Procédé selon la revendication 4, dans lequel le transfert de l'information de ressource de réseau du contrôleur défectueux au contrôleur secondaire, de sorte que le contrôleur secondaire contrôle un réseau contrôlé par le contrôleur défectueux, consiste en particulier à :
transférer l'information de ressource de réseau du contrôleur défectueux au contrôleur de sous-domaine secondaire, allouer une adresse de communication au contrôleur de sous-domaine secondaire selon l'information de ressource de réseau, et notifier l'adresse de communication à un dispositif d'un réseau de sous-domaine contrôlé par le contrôleur défectueux, de sorte que le contrôleur de sous-domaine secondaire contrôle le réseau de sous-domaine contrôlé par le contrôleur défectueux.

6. Procédé selon l'une quelconque des revendications 1 à 5, dans lequel le contrôleur défectueux est un contrôleur parent, et dans lequel la détermination d'un contrôleur secondaire selon l'information de ressource de réseau et l'information de statut d'exécution de chaque contrôleur dans la grappe de contrôleurs, consiste en particulier à :
déterminer, selon l'information de ressource de réseau et l'information de statut d'exécution de chaque contrôleur dans la grappe de contrôleurs, qu'un contrôleur parent secondaire est utilisé en guise de contrôleur parent, le contrôleur parent secondaire étant un contrôleur parent récemment activé ou un contrôleur parent se trouvant dans un état disponible dans la grappe de contrôleurs.

7. Procédé selon la revendication 6, dans lequel le transfert de l'information de ressource de réseau du contrôleur défectueux au contrôleur secondaire, de sorte que le contrôleur secondaire contrôle un réseau contrôlé par le contrôleur défectueux, consiste en particulier à :
transférer l'information de ressource de réseau d'un contrôleur quelconque au contrôleur parent secondaire, allouer une adresse de communication au contrôleur parent secondaire selon l'information de ressource de réseau, et notifier l'adresse de communication à un contrôleur de sous-domaine contrôlé par le contrôleur défectueux, de sorte que le contrôleur parent secondaire contrôle un réseau global contrôlé par le contrôleur défectueux.

8. Appareil de contrôle de réseau pour réseaux définis par logiciel, comprenant :
un module d'acquisition (901), conçu pour acquérir une information de ressource de réseau et une information de statut d'exécution de chaque contrôleur dans une grappe de contrôleurs, la grappe de contrôleurs comprenant une pluralité de contrôleurs de sous-domaine et au moins un contrôleur parent, chaque contrôleur de sous-domaine découvrant et contrôlant un réseau de sous-domaine d'un réseau défini par logiciel, et l'au moins un contrôleur parent contrôlant un réseau global sur la base du contrôleur de sous-domaine ;
un module de détermination (902), conçu pour déterminer un contrôleur défectueux ; et
un module de transfert (903), conçu pour déterminer un contrôleur secondaire selon l'information de ressource de réseau et l'information de statut d'exécution de chaque contrôleur dans la grappe de contrôleurs, et transférer l'information de ressource de réseau du contrôleur défectueux au contrôleur secondaire, de sorte que le contrôleur secondaire contrôle un réseau contrôlé par le contrôleur défectueux ;
le module de transfert étant en outre conçu pour :
quand il est déterminé, selon l'information de ressource de réseau et l'information de statut d'exécution de chaque contrôleur dans la grappe de contrôleurs, que des contrôleurs secondaires sont N contrôleurs de sous-domaine secondaires, diviser l'information de ressource de réseau du contrôleur défectueux en N parties d'information de ressource de réseau partielle, et envoyer séparément les N parties d'information de ressource de réseau partielle aux N contrôleurs de sous-domaine secondaires, de sorte que chaque contrôleur de sous-domaine secondaire reconstruise et contrôle, selon les informations de ressource de réseau partielles acquises, un réseau de sous-domaine partiel, le réseau contrôlé par le contrôleur défectueux étant divisé en N réseaux de sous-domaine partiels, et N étant un entier positif supérieur à 1.

9. Appareil selon la revendication 9, dans lequel le module d'acquisition est spécialement conçu pour :
acquérir de manière synchrone une adresse de communication, une information de service et une information de routage, et
une information de statut d'exécution appartenant à un noeud contrôlé par chaque contrôleur dans la grappe de contrôleurs.

10. Appareil selon la revendication 8 ou 9, dans lequel le module de détermination est spécialement conçu pour :
quand une information d'application de contrôleur est reçue, acquérir une adresse de communication d'un noeud envoyant l'information d'application de contrôleur, et déterminer le contrôleur défectueux selon l'adresse de communication du noeud et l'information de ressource de réseau acquise de manière synchrone de chaque contrôleur dans la grappe de contrôleurs ; ou
quand il est déterminé qu'une session entre l'appareil et un contrôleur est interrompue, déterminer que le contrôleur est un contrôleur défectueux.

11. Appareil selon l'une quelconque des revendications 8 à 10, dans lequel le module de transfert comprend :
un premier sous-module, conçu pour : quand le module de détermination détermine que le contrôleur défectueux est un contrôleur de sous-domaine, déterminer, selon l'information de ressource de réseau et l'information de statut d'exécution de chaque contrôleur dans la grappe de contrôleurs, qu'un contrôleur de sous-domaine secondaire est utilisé en guise de contrôleur secondaire, le contrôleur de sous-domaine secondaire étant un contrôleur de sous-domaine récemment activé ou un contrôleur de sous-domaine se trouvant dans un état disponible dans la grappe de contrôleurs ; et
un second sous-module, conçu pour transférer l'information de ressource de réseau du contrôleur défectueux au contrôleur secondaire, de sorte que le contrôleur secondaire contrôle le réseau contrôlé par le contrôleur défectueux.

12. Appareil selon la revendication 11, dans lequel le second sous-module est spécialement conçu pour :
transférer l'information de ressource de réseau du contrôleur défectueux au contrôleur de sous-domaine secondaire, allouer une adresse de communication au contrôleur de sous-domaine secondaire selon l'information de ressource de réseau, et notifier l'adresse de communication à un dispositif d'un réseau de sous-domaine contrôlé par le contrôleur défectueux, de sorte que le contrôleur de sous-domaine secondaire contrôle le réseau de sous-domaine contrôlé par le contrôleur défectueux.

13. Appareil selon l'une quelconque des revendications 8 à 11, dans lequel le module de transfert comprend en outre :
un premier sous-module, conçu pour : quand le module de détermination détermine que le contrôleur défectueux est un contrôleur parent, déterminer, selon l'information de ressource de réseau et l'information de statut d'exécution de chaque contrôleur dans la grappe de contrôleurs, qu'un contrôleur parent secondaire est utilisé en guise de contrôleur secondaire, le contrôleur parent secondaire étant un contrôleur parent récemment activé ou un contrôleur parent se trouvant dans un état disponible dans la grappe de contrôleurs ; et
un second sous-module, conçu pour transférer l'information de ressource de réseau du contrôleur défectueux au contrôleur secondaire, de sorte que le contrôleur secondaire contrôle le réseau contrôlé par le contrôleur défectueux.

14. Appareil selon la revendication 13, dans lequel le second sous-module est spécialement conçu pour :
transférer l'information de ressource de réseau d'un contrôleur quelconque au contrôleur parent secondaire, allouer une adresse de communication au contrôleur parent secondaire selon l'information de ressource de réseau, et notifier l'adresse de communication à un contrôleur de sous-domaine contrôlé par le contrôleur défectueux, de sorte que le contrôleur parent secondaire contrôle un réseau global contrôlé par le contrôleur défectueux.
